# EUROPÄISCHE PATENTSCHRIFT

(11) **EP 2 073 404 B1**
(45) Veröffentlichungstag und Bekanntmachung des Hinweises auf die Patenterteilung: **18.07.2012**
(21) Anmeldenummer: 08019569.6
(22) Anmeldetag: 08.11.2008
(51) Int. Cl.: H04B 10/105

(54) **Verfahren zur optischen Freiraum-Datenübertragung und System zur Durchführung des Verfahrens**
Method of optical free space data transmission and system to implement the method
Procédé destiné à la transmission de données optique dans un espace libre et système destiné à l'exécution du procédé

(30) Priorität: 18.12.2007 DE 102007061676
(43) Veröffentlichungstag der Anmeldung: 24.06.2009
(73) Patentinhaber: Deutsches Zentrum für Luft- und Raumfahrt e.V., 51147 Köln (DE)
(72) Erfinder: Epple, Bernhard, 80687 München (DE); Giggenbach, Dirk, Dr., 86932 Pürgen (DE)
(74) Vertreter: von Kreisler Selting Werner

(56) Entgegenhaltungen:
- EP-A- 0 863 627
- WO-A-99/45665
- US-A- 5 710 652

## Beschreibung

Die Erfindung betrifft ein Verfahren zur optischen Freiraum-Datenübertragung zwischen einem Kommunikationsterminal eines der Erdbeobachtung mittels Sensoren dienenden Raumflugkörpers, insbesondere eines Erdbeobachtungssatelliten, und einer Bodenstation, wobei die Strahlrichtung des Kommunikationsterminals mittels eines zur Ausrichtung der Sensoren auf ein aufzunehmendes Zielgebiet am Raumflugkörper vorgesehenen Mechanismus ausgerichtet wird.

Die Erfindung betrifft auch ein System zur Durchführung des Verfahrens.

Erdbeobachtungssatelliten und andere Raumflugkörper, z.B. andere Satellitentypen und planetare Raumsonden, benötigen eine möglichst hochratige Kommunikationsanbindung an die Erde mittels Kommunikationsbodenstationen. Insbesondere bei der Erdbeobachtung ist diese Kommunikationsanbindung stark asymmetrisch, da hauptsächlich eine Übertragung vom datengewinnenden Satelliten zum Boden hin erfolgt. Dieser sogenannte Daten-Downlink wird heute gewöhnlich mittels Hochfrequenz-Funkkommunikation im Frequenzband zwischen wenigen 100 MHz und 10 GHz und demnächst auch im Ka-Band (20-30 GHz) durchgeführt.

Da das Auflösungsvermögen der Beobachtungssensoren auf den Satelliten immer größer wird, werden auch immer mehr Daten erzeugt, die zum Boden übertragen werden müssen. Die bisher gewöhnlich verwendete, konventionelle Funktechnik ist allerdings auf Grund technischer und regulatorischer (Frequenzvergabe) Einschränkungen auf einige Mbps begrenzt.

Eine deutliche Steigerung dieser Übertragungsdatenrate, z.B. auf mehr als 1 Gbps, ist zur Zeit nicht abzusehen. Daher kann heute ein aktueller, hochauflösender Beobachtungssensor auf einem Beobachtungssatelliten auf Grund der eingeschränkten Downlink-Kapazität insgesamt nur wenige Minuten im Verlaufe eines Tages betrieben werden.

Eine Lösung bei Anwendung der konventionellen Funkübertragungstechnik besteht darin, die Anzahl der Bodenstationen erheblich zu erhöhen, wobei diese hierzu über die gesamte Erde verteilt werden müssten. Ein solches Vorgehen würde aber die Kosten und den Aufwand einer Beobachtungsmission ganz erheblich steigern. Daneben ist es vor allem bei militärischen und sicherheitstechnischen Anwendungen oft nicht erwünscht, den Daten-Downlink außerhalb des jeweiligen nationalen Hoheitsgebiets durchzuführen.

Zudem ist der Datentransfer von den Bodenstationen zu einer zentralen Datenauswertungsstelle problematisch, da hierzu teure hochratige Standleitungen angemietet werden müssten, die sogar zum Teil überhaupt nicht vorhanden sind. Der Datentransfer erfolgt über einen manuellen Speicherbändertransport. Die vorgesehene Erweiterung der Hochfrequenz-Funkträgerfrequenzen zum Ka-Band hin hat den Nachteil, dass Regen und dichte Wolken die Verbindung erheblich dämpfen können und damit die Verfügbarkeit stark einschränken.

Aus US 6 271 877 B1 und US 2003/0095181 A1 z.B. sind derartige mit Funk betriebene Datenübertragungen zwischen Satelliten und Bodenstationen zum Zwecke der Erdbeobachtung bekannt.

Aus US 6 259 544 B1 ist ein Kommunikationssystem bekannt, das zur Kommunikation zwischen Satelliten oder für eine Strecke zwischen Satelliten und Bodenstationen anstelle einer Mikrowellen-Funkübertragung eine optische Freiraum-Signalübertragung benutzt, so dass erheblich höhere Bandbreiten und damit Übertragungsraten erreicht werden. Auch aus US 2002/0181059 A1 ist ein Kommunikationssystem mit optischer Freiraum-Übertragung von Signalen zwischen Satelliten und einer Bodenstation bekannt. Dieses bekannte System arbeitet im Infrarot-Bereich und soll ebenfalls die herkömmlichen Mikrowellen-Übertragungssysteme wegen der damit erzielbaren höheren Datenübertragungsraten ersetzen.

Aus US 6 297 897 B1 ist ebenfalls ein Verfahren zur optischen Freiraum-Informationsübertragung über Satelliten bekannt. Dabei wird eine optische Breitband-Modulations- und -Empfangstechnik verwendet.

Gemäß JP 10065620 A soll ein datenoptisches Kommunikationssystem geschaffen werden, das große Mengen beobachteter Daten, die ein Beobachtungssatellit aufnimmt, genau und günstig zum Boden in kurzer Zeit überträgt, ohne dass eine Beeinflussung durch Wetter und dergleichen erfolgt. Dazu sind Empfangsstationen an einer Vielzahl von Orten zum Empfangen beobachteter Daten vom Beobachtungssatelliten angebracht. Eine Zentrale erkundet Wetterinformationen und dergleichen an den jeweiligen Empfangsstationsanbringungsorten und bestimmt die Empfangsstation, die als Kommunikationsstation eine optische Kommunikation mit dem Satelliten ohne Wolken lange ausführen kann.

Die als Kommunikationsstation bestimmte Empfangsstation strahlt Laserlicht von einem Lasersender zum Satelliten aus. Der Satellit detektiert die Ankunftsrichtung des Laserlichts und sendet in diese Richtung beobachtete Daten mittels Licht. Die Kommunikationsstation empfängt sie und sendet sie zur Zentrale. Wenn die optische Kommunikation durch eine Wolke unterbrochen wird, fällt der Datenempfangspegel ab und daher wird diese Auswirkung der Zentrale mitgeteilt. Die Zentrale bestimmt unter den Empfangsstationen eine, die eine optische Kommunikation durchführen kann, bewerkstelligt erneut die gleiche Verarbeitung und sendet/empfängt die folgenden Daten.

Aus US 2006/0056852 A1 ist ein an Bord eines Raumflugkörpers angebrachtes optisches Kommunikationsterminal bekannt, dessen Übertragungsfeld in Bezug zu einer Hauptplattform dieses Raumflugkörpers fest ausgerichtet ist. Während einer optischen Freiraumübertragung zwischen dem Bord-Kommunikationsterminal und einem davon entfernten optischen Kommunikationsterminal, z.B. in einem anderen Satelliten oder in einer Bodenstation, wird das Bord-Kommunikationsterminal zum entfernten Kommunikationsterminal ausgerichtet, indem die Hauptplattform des Raumflugkörpers gedreht wird. Danach erfüllt das System zum Ausrichten der Hauptplattform des Satelliten die Funktion einer Grobausrichtungsanordnung des darauf angebrachten optischen Freiraum-Kommunikationsterminals. Diese durch die mechanische Ausrichtbarkeit der Hauptplattform realisierte Funktion kann auf verschiedene Weise mit anderen, bereits bekannten Funktionen kombiniert werden, wie z.B. mit der Ausrichtung von Solarzellenflächen, einer Kamera oder einer Funkübertragungseinrichtung.

US 5710652 beschreibt ein Übertragungssystem zur Laserkommunikation, bei dem mehrere Transceiver verwendet werden. Jeder Transceiver umfasst einen Laser, der einen Ortungsstrahl bereitstellt. Die Transceiver ermitteln die genaue Position anderer Transceiver durch eine Detektion dieser Ortungsstrahlen mit entsprechenden Empfangseinheiten, die entsprechend an die übertragene Ortungsstrahlwellenlänge angepasst sind. Die Transceiver sind in 66 Satteliten installiert, die sich in einer niedrigen Laufbahn bewegen und ferner an ausgewählten Berggipfeln auf der Erde, um ein weltweites Kommunikationssystem bereitzustellen.

Aufgabe der vorliegenden Erfindung ist es, bei einem Kommunikationssystem, das zur Übertragung von Daten zwischen einen Raumflugkörper und Bodenstationen im Rahmen von Erdbeobachtungen dient, zum einen die bei herkömmlich verwendeten Mikrowellensystemen gegebenen Beschränkungen aufzuheben und zum anderen unter Verwendung der von keinerlei Regulierung betroffenen und deshalb frei einsetzbaren, optischen Freiraumübertragungstechnik ein Verfahren und ein System zu schaffen, durch welche das gesamte Übertragungssystem besser als bisher an den Raumflugkörper angepasst werden kann.

Dabei sollen hohe Übertragungsdatenraten bei gleichzeitig geringerem Leistungsverbrauch und niedrigerem Gewicht und Volumen des am Raumflugkörper angeordneten Kommunikationsterminals erreicht werden, so dass das durch die Erfindung zu schaffende Verfahren und das zu schaffende System zur Durchführung dieses Verfahrens auch für die Verwendung bei Kompaktsatelliten geeignet sind.

Darüber hinaus soll durch die vorliegende Erfindung erreicht werden, bei dem Verfahren und System zur optischen Freiraum-Übertragung von Daten zwischen einem Raumflugkörper und einer Bodenstation mittels einer Überwachung dafür Sorge zu tragen, dass während Verbindungsunterbrechungen insbesondere durch Wolken keine Datenübertragung stattfindet, wobei die eingesetzten Überwachungsmaßnahmen noch zusätzliche Funktionen erfüllen sollen.

Gemäß der Erfindung, die sich auf ein Verfahren der eingangs genannten Art bezieht, wird diese Aufgabe dadurch gelöst, dass Verbindungsunterbrechungen während der optischen Freiraum-Datenübertragung zwischen dem am Raumflugkörper angebrachten Kommunikationsterminal und der Bodenstation detektiert werden, indem eine optische Lichtstrecke zwischen einer an der Bodenstation vorgesehenen Leuchtbake und einem am Raumflugkörper befindlichen optischen Sensor, der auf das von der Leuchtbake ausgestrahlte Licht reagiert, überwacht wird, und die optische Freiraum-Datenübertragung so lange angehalten wird, bis die optische Lichtstrecke wieder hergestellt ist und dass mittels der an der Bodenstation vorgesehenen Leuchtbake die Mechanismen zur Lageregelung des Raumflugkörpers korrigierend nachgestellt werden und ein zusätzlicher, niederratiger Rückkanal implementiert wird, über welchen Datenraten für eine verbindungsdynamische Datenratenanpassung, Paketwiederholraten für eine Fehlerkorrektur und dergleichen ausgehandelt oder den Verbindungszustand betreffende Informationen übertragen werden.

Dieses Verfahren nach der vorliegenden Erfindung ist deswegen vorteilhaft, weil Satelliten mit hochauflösenden Sensoren heutzutage eine sehr genaue Zielausrichtung (Target Pointing) durchführen müssen, um die gemachten Aufnahmen und Messungen den jeweils beobachteten Zielgebieten auf der Erde zuordnen zu können. Satelliten weisen hierfür eine Kombination aus mehreren Sternenkameras, Drallrädern und anderen Stelleinrichtungen auf. Diese Mechanismuskombination kann beim Verfahren nach der vorliegenden Erfindung vorteilhaft genutzt werden.

Ein vorteilhaftes und zweckmäßiges System zur Lösung der vorstehend angegebenen Aufgabe zeichnet sich dadurch aus, dass das am Raumflugkörper angebrachte Kommunikationsterminal modular aufgebaut ist und in der Bodenstation ein optoelektronisches Frontend vorgesehen ist, dass an der Bodenstation eine Leuchtbake angeordnet ist und dass im Kommunikationsterminal des Raumflugkörpers ein auf das von der Leuchtbake ausgestrahlte Licht reagierender optischer Sensor installiert ist.

Vorteilhafte Weiterbildungen und Ausgestaltungen des Verfahrens und des Systems nach der vorliegenden Erfindung sind in auf den Patentanspruch 1 bzw. 13 unmittelbar oder mittelbar rückbezogenen Unteransprüchen angegeben.

Die vorliegende Erfindung und deren Vorteile werden nachfolgend anhand einer Figur im Einzelnen erläutert.

In seiner minimalen Ausbaustufe besteht der Sendeteil eines an einem der Erdbeobachtung dienenden Raumflugkörper, z.B. einem Erdbeobachtungssatelliten, untergebrachten Kommunikationsterminals aus einer redundanten Sendeelektronik mit jeweils einem Lasermodul. Sollte die Sendeleistung der Lasermodule nicht für eine Datenübertragung ausreichen, so können noch optische Verstärker (Faser- oder Halbleiterverstärker eingesetzt werden.

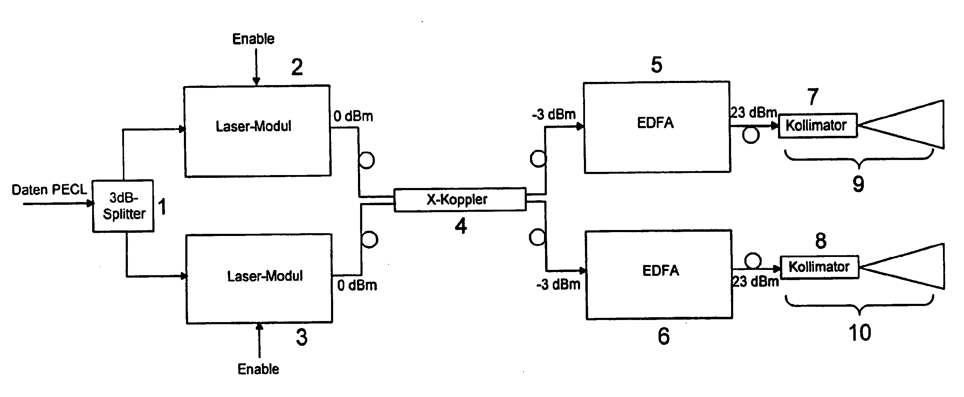

In diesem Zusammenhang wird auf die beigefügte Figur hingewiesen, in welcher in einem Blockschaltbild ein Ausführungsbeispiel eines redundant aufgebauten Sendeteils eines in einem Erdbeobachtungssatelliten untergebrachten Kommunikationsterminals dargestellt ist. Die zur Erde zu einer Bodenstation hin zu übertragenden Daten werden - herauskommend von einer PECL (Positive Emitter Coupled Logic) - über einen 3dB-Splitter 1 parallel zwei Laser-Modulen 2 und 3 zugeführt, wobei nur einer der beiden Laser-Module 2 bzw. 3 über seinen Enable-Eingang wirksam geschaltet ist. Diese Redundanz ist vorgesehen, um die Ausfallsicherheit zu erhöhen. Sie muss jedoch nicht unbedingt implementiert werden.

Über Lichtwellenleiter sind die beiden Laser-Module mit einem X-Koppler 4 verbunden, von dessen Ausgangsseite zwei Lichtwellenleiter zu optischen Verstärkern 5 bzw. 6 in Form eines EDFA (Erbium-dotierter Faserverstärker) führen. Ausgangsseitig sind diese beiden Verstärker 5 und 6 jeweils mit einem einen Kollimator 7 bzw. 8 aufweisenden Objektiv 9 bzw. 10 verbunden, von dessen Apertur die modulierte Lichtwelle in Richtung zu einer Bodenstation scharf gebündelt abgestrahlt wird.

Die Übertragung erfolgt in der einfachen Ausbaustufe simplex vom Satelliten ausgehend (unidirektional) und über eine On-Off-Keying-Modulation. Für den Empfang ist in diesem Fall eine Bodenstation mit einem empfindlichen optoelektronischen Frontend notwendig. Für die Übertragung der Daten richtet der Satellit die Sendekollimatoren auf die Bodenstation aus und beginnt mit der Datenübertragung, sobald sich der Satellit im Sichtbereich der Bodenstation befindet.

Die Bodenstation richtet den Empfänger anhand von Bahndaten auf den Satelliten aus und empfängt das optische Signal des Satelliten. Um unnötigen Datenverlust zu vermeiden, sollte sich die Bodenstation schon auf den Satelliten ausrichten, bevor er in den Sichtbereich eintritt. Um die Empfangsqualität zu verbessern, können optische Sensoren verwendet werden, um Abweichungen der Satellitenbahn von den vorherberechneten Bahndaten auszugleichen.

Auf Grund der asymmetrischen Ausrichtung (simplex) der Datenübertragungsverbindung ist auf dem Satelliten nur eine kleine Sendeapertur mit wenigen Zentimetern Durchmesser notwendig. Auf der Empfangsseite in der Bodenstation wird hierfür eine Empfangsapertur von einigen Dezimetern bis zu etwa einem Meter benötigt (z.B. einfache Standardteleskope der Astronomie). Die Größe der Empfangsapertur ist abhängig von der verwendeten Datenrate.

Wolken können die Verbindung unterbrechen. Da die Ausrichtung von Sender und Empfänger jedoch "open-loop" erfolgt, kann die Übertragung sofort nach Ende der Unterbrechung fortgesetzt werden.

Zusätzlich ist es möglich, eine Leuchtbake (Beacon) an der Bodenstation und einen optischen Sensor auf dem Kommunikationsterminal des Satelliten zu installieren.

Auf diese Weise kann das Kommunikationsterminal des Satelliten Link-Unterbrechungen selbständig detektieren und die Datenübertragung so lange anhalten, bis die Verbindung wiederhergestellt ist.

Eine in der Bodenstation vorgesehene Leuchtbake kann auch zweckmäßig dazu verwendet werden, die Lageregelung des Satelliten zu verbessern und einen zusätzlichen niederratigen Rückkanal zu implementieren. Über diesen Rückkanal können z.B. Datenraten für eine verbindungsdynamische Datenratenanpassung, Paketwiederholanforderungen für eine Fehlerkorrektur und dergleichen ausgehandelt oder Informationen über den Verbindungszustand übertragen werden.

Eine weitere Möglichkeit der Fehlervermeidung/-korrektur besteht darin, die gesendeten Daten geeignet vorzucodieren, so dass sie nach dem Empfang trotz Verlusten wiederhergestellt werden können.

In einer weiteren Ausbaustufe kann das Kommunikationsterminal des Satelliten für eine bidirektionale Kommunikation (Duplex-Betrieb) erweitert werden. Hierfür muss eine entsprechende Empfangsoptik und -elektronik in das Kommunikationsterminal des Satelliten integriert werden. Als Modulationsformat kann nicht nur On/Off-Keying verwendet werden. Es ist zweckmäßig, eines der Modulationsformate FSK oder BPSK, also binäre Frequenz- oder Phasenmodulation, zu verwenden. Diese Modulationsweise wird durch einen entsprechenden Modulator nach der Sendequelle oder durch direkte Frequenzmodulation anhand des Diodenstromes erreicht. Das F- oder P-modulierte Signal muss danach optisch verstärkt werden. Dies geschieht wieder mittels Faser- oder Halbleiter-Verstärkern.

Die FSK- oder BPSK-Modulation hat den Vorteil, dass sie in der Bodenstation mittels kohärentem Überlagerungsempfang detektiert werden kann, was einen Empfindlichkeitsvorteil um bis zu einem Faktor 10 und eine hohe Hintergrundlicht-Unempfindlichkeit (Sonnenblendung) gegenüber On/Off-Keying mit direkter Detektion mit sich bringt.

Bei entsprechender differentieller Vorcodierung ist es zudem möglich, das (D)PSK-modulierte Signal in der Bodenstation zum einen bei genügender Empfangsleistung (geringe Distanz, großes Empfangsteleskop) mittels eines einfachen Selbsthomodynempfängers zu detektieren und zum anderen bei geringer Empfangsleistung (große Satellitendistanz, kleines Empfangsteleskop, starke atmosphärische Dämpfung) mittels eines aufwendigeren kohärenten Überlagerungsempfängers zu detektieren. Des Sende-Modulationsformat auf dem Satelliten muss dabei nicht geändert werden.

Durch den modularen Aufbau ist es möglich, zu dem Basiskommunikationsterminal des Satelliten noch eine Feinausrichteinrichtung (Fine-Pointing-Assembly; FPA) oder eine Grobausrichteinrichtung (Coarse-Pointing-Assembly; CPA) oder beides zum System hinzuzufügen. Somit kann die Ausrichtung des Sendelasers unabhängig von der Lage des Satelliten nachgesteuert werden.

Um die pro Tag mögliche Datenmenge zu erhöhen bzw. um die Auswirkungen von ungeeigneten Wetterbedingungen an der Bodenstation zu reduzieren, ist es zweckmäßig, mehrere Bodenstationen für den Downlink bereitzustellen. Die Standorte der Bodenstationen sollten dabei in klimatisch begünstigten Regionen liegen und möglichst weit voneinander entfernt sein, um eine Korrelation der Wetterbedingungen zu vermeiden. Die empfangenen Daten müssen nach dem Empfang durch die einzelnen Bodenstationen zusammengeführt werden. Hierfür gibt es dis Möglichkeit, einen zentralen Server bereitzuhalten, auf den die Daten aus den einzelnen Bodenstationen hochgeladen und zusammengeführt werden.

Es kann jedoch auch ein dezentraler Ansatz verfolgt werden, bei dem sich die Bodenstationen untereinander über ein geeignetes Protokoll verständigen und die fehlenden Datenpakete austauschen. Spezielle Protokollfunktionen (Routing) achten darauf, dass nicht unnötig Datenpakete ausgetauscht werden bzw. dass eine kostengünstige Verwendung der vorhandenen Datenverbindungen vorgenommen wird.

Das Verfahren nach der vorliegenden Erfindung ist grundsätzlich nicht abhängig von der verwendeten Wellenlänge. Aus folgenden Gründen wird jedoch eine Wellenlänge von 1550 Nanometern als zweckmäßig vorgeschlagen:
- Komponenten bei dieser Wellenlänge sind seit Jahren für die terrestrische Glasfaserkommunikation ausgereift und stehen kostengünstig zur Verfügung.
- Bei einer Wellenlänge von 1550 nm ist im Gegensatz zu kürzeren Wellenlängen das störende Hintergrundlicht (von der Sonne und von Reflexionen stammend) um etwa den Faktor 10 geringer.
- Es existieren für diese Wellenlänge Laserdioden und optische Faserverstärker mit hoher Ausgangsleistung.
- Es kann sowohl die einfachere OOK/DD (On/Off-Keying/Direktdetektion) als auch die kohärente FSK- bzw. BPSK-Modulationstechnologie verwendet werden und somit können je nach Randbedingungen mit den gleichen Optiken verschiedene Verbindungsszenarien bedient werden, ohne dass beim Wechsel des Modulationsformats aufwendige Neuentwicklungen durchgeführt werden müssen.
- Bei 1550 nm ist die Augensicherheit so gut, dass auch bei einer starken Bodenstationsbake keine Gefahr für das Bedienpersonal der Bodenstation besteht, was bei kürzeren Kommunikationswellenlängen wie z.B. 800 nm oder 1 µm der Fall wäre.

### Bezugszeichenliste

- 1: 3dB-Splitter
- 2, 3: Laser-Modul
- 4: X-Koppler
- 5, 6: Optischer Verstärker
- 7, 8: Kollimator
- 9, 10: Objektiv

## Patentansprüche

1. Verfahren zur optischen Freiraum-Datenübertragung zwischen einem Kommunikationsterminal eines der Erdbeobachtung mittels Sensoren dienenden Raumflugkörpers, insbesondere eines Erdbeobachtungssatelliten, und einer Bodenstation, wobei die Strahlrichtung des Kommunikationsterminals mittels eines zur Ausrichtung der Sensoren auf ein aufzunehmendes Zielgebiet am Raumflugkörper vorgesehenen Mechanismus ausgerichtet wird, **dadurch gekennzeichnet, dass** Verbindungsunterbrechungen während der optischen Freiraum-Datenübertragung zwischen dem am Raumflugkörper angebrachten Kommunikationsterminal und der Bodenstation detektiert werden, indem eine optische Lichtstrecke zwischen einer an der Bodenstation vorgesehenen Leuchtbake und einem am Raumflugkörper befindlichen optischen Sensor, der auf das von der Leuchtbake ausgestrahlte Licht reagiert, überwacht wird, und die optische Freiraum-Datenübertragung so lange angehalten wird, bis die optische Lichtstrecke wieder hergestellt ist und dass mittels der an der Bodenstation vorgesehenen Leuchtbake die Mechanismen zur Lageregelung des Raumflugkörpers korrigierend nachgestellt werden und ein zusätzlicher, niederratiger Rückkanal implementiert wird, über welchen Datenraten für eine verbindungsdynamische Datenratenanpassung, Paketwiederholraten für eine Fehlerkorrektur und dergleichen ausgehandelt oder den Verbindungszustand betreffende Informationen übertragen werden.

2. Verfahren nach Anspruch 1, **dadurch gekennzeichnet, dass** die optische Freiraum-Datenübertragung simplex vom Raumflugkörper zu einer Bodenstation hin vorgenommen wird.

3. Verfahren nach Anspruch 1, **dadurch gekennzeichnet, dass** die optische Freiraum-Datenübertragung bidirektional zwischen dem Raumflugkörper und einer Bodenstation vorgenommen wird.

4. Verfahren nach einem der vorhergehenden Ansprüche, **dadurch gekennzeichnet, dass** zur Modulation bei der optischen Freiraum-Datenübertragung On-Off-Keying verwendet wird.

5. Verfahren nach einem der Ansprüche 1 bis 3, **dadurch gekennzeichnet, dass** zur Modulation bei der optischen Freiraum-Datenübertragung als Modulationsformat eine binäre Frequenzmodulation (FSK) oder eine binäre Phasenmodulation (BPSK) verwendet wird.

6. Verfahren nach einem der vorhergehenden Ansprüche, **dadurch gekennzeichnet, dass** die Strahlausrichtung der Bodenstation in Richtung auf den Raumflugkörper anhand von vorherberechneten Bahndaten des Raumflugkörpers vorgenommen wird.

7. Verfahren nach Anspruch 6, **dadurch gekennzeichnet, dass** die Strahlausrichtung der Bodenstation in Richtung auf den Raumflugkörper zusätzlich anhand von optischen Sensoren vorgenommen wird, um Abweichungen von den vorherberechneten Bahndaten auszugleichen.

8. Verfahren nach einem der vorhergehenden Ansprüche, **dadurch gekennzeichnet, dass** zur Fehlervermeidung und/oder Fehlerkorrektur die zu übertragenden Daten vorcodiert werden, so dass sie nach dem Empfang wieder herstellbar sind.

9. Verfahren nach einem der vorhergehenden Ansprüche, **dadurch gekennzeichnet, dass** für die vom Kommunikationsterminal des Raumflugkörpers ausgehende Downlink-Verbindung mehrere geographisch verteilte Bodenstationen zur Übertragung bereitgestellt werden und dass die in verschiedenen Bodenstationen empfangenen Daten nach dem Empfang zusammengeführt werden.

10. Verfahren nach Anspruch 9, **dadurch gekennzeichnet, dass** zur Zusammenführung der von verschiedenen Bodenstationen empfangenen Daten ein zentraler Server bereitgehalten wird, auf den die Daten aus den einzelnen Bodenstationen hochgeladen und zusammengeführt werden.

11. Verfahren nach Anspruch 9, **dadurch gekennzeichnet, dass** sich zur Zusammenführung der Daten die verschiedenen Bodenstationen untereinander über ein geeignetes Protokoll verständigen und die fehlenden Datenpakete austauschen, wobei spezielle Protokollfunktionen darauf achten, dass nicht unnötig Datenpakete ausgetauscht werden und dass eine kostengünstige Verwendung der vorhandenen Datenübertragungsverbindungen vorgenommen wird.

12. Verfahren nach einem der vorhergehenden Ansprüche, **dadurch gekennzeichnet, dass** die Freiraum-Datenübertragung auf einer Wellenlänge von etwa 1550 Nanometer betrieben wird.

13. System mit Mitteln eingerichtet zur Durchführung des Verfahrens nach einem der vorhergehenden Ansprüche, **dadurch gekennzeichnet, dass** das am Raumflugkörper angebrachte Kommunikationsterminal modular aufgebaut ist und in der Bodenstation ein optoelektronisches Frontend vorgesehen ist, dass an der Bodenstation eine Leuchtbake angeordnet ist und dass im Kommunikationsterminal des Raumflugkörpers ein auf das von der Leuchtbake ausgestrahlte Licht reagierender optischer Sensor installiert ist.

14. System nach Anspruch 13, **dadurch gekennzeichnet, dass** im Sendeteil des Kommunikationsterminals ein mit den zu übertragenden Daten modulierbarer Lasermodul (5, 6) vorgesehen ist, dessen moduliertes Lasersignal lichtleitergeführt über ein Objektiv (9, 10) mit Kollimator (8, 9) in den Freiraum als scharf gebündelter Strahl zu einer Bodenstation abgestrahlt wird, dass zwischen dem Lasermodul (5, 6) und dem Objektiv (9, 10) ein optischer Verstärker (5, 6) eingefügt ist, dass im Kommunikationsterminal des Raumflugkörpers ein Empfangsteil mit einem Empfangsobjektiv integriert ist und dass die Module des Sendeteils im Kommunikationsterminal redundant ausgeführt sind.

15. System nach Anspruch 13 oder 14, **dadurch gekennzeichnet, dass** am Kommunikationsterminal eine Feinausrichteinrichtung (Fine-Pointing-Assembly; FPA) oder eine Grobausrichteinrichtung (Coarse-Pointing-Assembly; GPA) zur genauen Nachführung der am Kommunikationsgerät vorgesehenen Objektive auf die jeweilige Bodenstation vorgesehen ist.

## Claims

1. A method for optical free space data transmission between a communication terminal of a space vessel for earth observation by means of sensors, in particular an earth observation satellite, and a ground station, wherein the beam direction of the communication terminal is adjusted by means of a mechanism provided at the space vessel, said mechanism being intended for the pointing of the sensors to a target area to be recorded, **characterized in that** link interruptions during the optical free space data transmission between the communication terminal provided on the space vessel and the ground station are detected by monitoring an optical light path between a beacon provided at the ground station and an optical sensor provided on the space vessel, which sensor responds to light emitted from the beacon, and the optical free space data transmission is halted until the optical light path is re-established, and that the beacon provided at the ground station is used to readjust the mechanisms for the position control of the space vessel in a correcting manner, and an additional low-rate feedback channel is implemented via which data rates for a link-dynamic data rate adjustment, package repetition rates for error correction and the like are negotiated or information on the link condition are transmitted.

2. The method of claim 1, **characterized in that** the optical free space data transmission is performed in a simplex manner from the space vessel to a ground station.

3. The method of claim 1, **characterized in that** the optical free space data transmission is performed in a bidirectional manner between the space vessel and a ground station.

4. The method of one of the preceding claims, **characterized in that** on-off keying is used for modulation in the optical free space data transmission.

5. The method of one of claims 1 to 3, **characterized in that** a binary frequency modulation (FSK) or a binary phase modulation (BPSK) is used as a modulation format for modulation in optical free space data transmission.

6. The method of one of the preceding claims, **characterized in that** the beam orientation of the ground station towards the space vessel is performed on the basis of pre-calculated orbit data of the space vessel.

7. The method of claim 6, **characterized in that** the beam orientation of the ground station towards the space vessel is performed additionally based on optical sensors in order to compensate for deviations from the pre-calculated orbit data.

8. The method of one of the preceding claims, **characterized in that**, in the interest of avoiding errors and/or of correcting errors, the data to be transmitted are pre-coded so that they can be recovered after reception.

9. The method of one of the preceding claims, **characterized in that** for the downlink connection starting from the communication terminal of the space vessel, a plurality of geographically distributed ground stations are provided for transmission, and that the data received by different ground stations are combined after reception.

10. The method of claim 9, **characterized in that** a central server is provided for the combination of the data received by different ground stations, onto which server the data from the individual ground stations are uploaded and combined.

11. The method of claim 9, **characterized in that** the different ground stations agree among each other on a suitable protocol for the combination of the data and exchange the missing data packages, wherein special protocol functions take care that data packages are not exchanged unnecessarily, and that cost-effective use is made of the existing data transmission links.

12. The method of one of the preceding claims, **characterized in that** the free space data transmission is performed at a wavelength of about 1550 nanometers.

13. A system provided with means for performing the method of one of the preceding claims, **characterized in that** the communication terminal provided at the space vessel is of modular structure and an optoelectronic front end is provided in the ground station, that a beacon is arranged at the ground station, and that an optical sensor is installed, in the communication terminal of the space vessel, which responds to light emitted from the beacon.

14. The system of claim 13, **characterized in that** a laser module (5, 6) is provided in the transmission part of the communication terminal, which is adapted to be modulated with the data to be transmitted, the modulated laser signal of the module being emitted, guided by a light guide, via an objective (9, 10) with a collimator (8, 9) into the free space as a sharply focused beam to a ground station, that an optical amplifier (5, 6) is inserted between the laser module (5, 6) and the objective (9, 10), that a receiving part with a receiving objective is integrated in the communication terminal of the space vessel, and that the modules of the transmission part in the communication terminal are provided redundantly.

15. The system of claim 13 or 14, **characterized in that** a fine pointing assembly (FPA) or a coarse pointing assembly (CPA) is arranged at the communication terminal for an exact tracking of the objectives provided at the communication apparatus to the respective ground station.

## Revendications

1. Procédé de transmission optique de données dans l'espace entre un terminal de communication d'un engin spatial qui effectue l'observation terrestre au moyen de capteurs, en particulier d'un satellite d'observation terrestre, et une station au sol, dans lequel la direction du faisceau du terminal de communication est réglée au moyen d'un mécanisme prévu sur l'engin spatial pour pointer les capteurs sur un domaine cible qu'il s'agit d'observer, **caractérisé en ce que** des interruptions de communication intervenant pendant la transmission optique de données dans l'espace entre le terminal de communication appliqué sur l'engin spatial et la station au sol sont détectés, **en ce qu'**un trajet de lumière optique entre une balise optique prévue sur la station au sol et un capteur optique situé sur l'engin spatial et qui réagit à la lumière émise par la balise optique est surveillé, et **en ce que** la transmission optique de données dans l'espace est maintenue jusqu'à ce que le trajet de lumière optique soit rétabli, et **en ce qu'**au moyen de la balise optique prévue sur la station au sol, les mécanismes servant à la régulation de la position de l'engin spatial sont ajustés par correction et un canal de retour additionnel, de rang inférieur est mis en oeuvre, au moyen duquel sont négociées les cadences de données utilisées pour l'adaptation dynamique de liaison, les cadences de répétition de paquets utilisées pour une correction des erreurs et équivalent ou au moyen duquel sont transmises des informations concernant l'état de la liaison.

2. Procédé selon la revendication 1, **caractérisé en ce que** la transmission optique de données dans l'espace s'effectue en mode unidirectionnel de l'engin spatial à une station au sol.

3. Procédé selon la revendication 1, **caractérisé en ce que** la transmission de données optiques dans l'espace s'effectue en mode bidirectionnel entre l'engin spatial et une station au sol.

4. Procédé selon l'une des revendications précédentes, **caractérisé en ce que**, dans la transmission optique de données dans l'espace, on utilise pour la modulation une manipulation par tout ou rien.

5. Procédé selon l'une des revendications 1 à 3, **caractérisé en ce que**, pour la modulation dans la transmission optique de données dans l'espace libre, on utilise comme format de modulation une modulation par déplacement de fréquence binaire (FSK) ou une modulation par déplacement de phase binaire (BPSK).

6. Procédé selon l'une des revendications précédentes, **caractérisé en ce que** le pointage du faisceau de la station au sol en direction de l'engin spatial s'effectue à l'aide de données préalablement calculées de l'orbite de l'engin spatial.

7. Procédé selon la revendication 6, **caractérisé en ce que** le pointage du faisceau de la station au sol en direction de l'engin spatial s'effectue en outre à l'aide de capteurs optiques pour compenser les déviations par rapport aux données préalablement calculées de l'orbite.

8. Procédé selon l'une des revendications précédentes, **caractérisé en ce que**, pour éviter les erreurs et/ou corriger les erreurs, les données à transmettre sont préalablement codées de façon telle qu'elles peuvent être reconstituées après la réception.

9. Procédé selon l'une des revendications précédentes, **caractérisé en ce que**, pour la liaison descendante partant du terminal de communication de l'engin spatial, plusieurs stations au sol réparties géographiquement sont affectées à la transmission, et **en ce que** les données reçues dans différentes stations au sol sont assemblées après la réception.

10. Procédé selon la revendication 9, **caractérisé en ce qu'**un serveur central est affecté à l'assemblage des données reçues par différentes stations au sol, serveur sur lequel les données provenant des différentes stations au sol sont téléchargées et assemblées.

11. Procédé selon la revendication 9, **caractérisé en ce que**, pour l'assemblage des données, les différentes stations au sol s'accordent entre elles sur un protocole approprié et s'échangent les paquets de données manquants, des fonctions de protocole spéciales assurant qu'il ne se produise pas d'échange de paquets de données inutiles et que soit entreprise une utilisation économe les liaisons de transmission de données disponibles.

12. Procédé selon l'une des revendications précédentes, **caractérisé en ce que** la transmission de données dans l'espace s'effectue sur une longueur d'onde d'environ 1550 nanomètres.

13. Système équipé de moyens pour la mise en oeuvre du procédé selon l'une des revendications précédentes, **caractérisé en ce que** le terminal de communication monté sur l'engin spatial est d'une construction modulaire et **en ce qu'**une tête optoélectronique est prévue dans la station au sol, **en ce qu'**une balise optique est montée sur la station au sol, et **en ce qu'**un capteur optique qui réagit à la lumière émise par la balise optique est installé dans le terminal de communication de l'engin spatial.

14. Système selon la revendication 13, **caractérisé en ce que**, dans la partie émettrice du terminal de communication est prévu un module laser (5, 6) qui peut être modulé par les données à transmettre et dont le signal laser modulé est transmis dans l'espace, conduit par un conducteur optique et à travers un objectif (9, 10) équipé d'un collimateur (8, 9), vers une station au sol sous la forme d'un faisceau très fin, **en ce qu'**un amplificateur optique (5, 6) est intercalé entre le module laser (5, 6) et l'objectif (9, 10), **en ce qu'**une partie réceptrice équipée d'un objectif de réception est intégrée dans le terminal de communication de l'engin spatial, et **en ce que** les modules de la partie émettrice contenue dans le terminal de communication sont réalisés en nombre redondant.

15. Système selon la revendication 13 ou 14, **caractérisé en ce que** sur le terminal de communication est prévu un dispositif de pointage fm (Fine-Pointing-Assembly) ou un dispositif de pointage de première approximation qui assure le guidage précis des objectifs de l'appareil de communication sur la station au sol considérée.
